# EUROPÄISCHE PATENTSCHRIFT

(11) **EP 2 373 457 B1**
(45) Veröffentlichungstag und Bekanntmachung des Hinweises auf die Patenterteilung: **25.02.2015**
(21) Anmeldenummer: 09803997.7
(22) Anmeldetag: 25.11.2009
(51) Int. Cl.: B23Q 1/40, B23Q 1/52, F16C 39/06, F16C 25/06, F16C 19/18

(54) **LAGERANORDNUNG MIT MAGNETLAGERABSCHNITT SOWIE VERFAHREN ZUR REGELUNG EINER ODER DER LAGERANORDNUNG**
BEARING ARRANGEMENT HAVING A MAGNETIC BEARING SEGMENT, AND METHOD FOR CONTROLLING A OR THE BEARING ARRANGEMENT
ENSEMBLE PALIER AVEC SECTION DE PALIER MAGNÉTIQUE AINSI QUE PROCÉDÉ DE RÉGLAGE D'UN OU DE L'ENSEMBLE SYSTÈME DE PALIER

(30) Priorität: 04.12.2008 DE 102008060569
(43) Veröffentlichungstag der Anmeldung: 12.10.2011
(73) Patentinhaber: Schaeffler Technologies GmbH & Co. KG, 91074 Herzogenaurach (DE)
(72) Erfinder: DUPPE, Carsten, 97273 Kürnach (DE); DÜRSCHMIED, Frank, 91154 Roth (DE); SCHMID, Günter, 90475 Nümberg (DE)
(86) Internationale Anmeldenummer: PCT/DE2009/001675
(87) Internationale Veröffentlichungsnummer: WO 2010/063261

(56) Entgegenhaltungen:
- EP-A1- 0 470 637
- EP-A1- 0 612 933
- DE-A1-102006 036 051
- DE-A1-102006 053 041
- JP-A- 63 167 119
- US-A- 4 985 651

## Beschreibung

### Gebiet der Erfindung

Die Erfindung betrifft eine Lageranordnung mit zwei Lagerpartnern, mit einem Wälzlagerabschnitt und mit einem Magnetlagerabschnitt, wobei der Magnetlagerabschnitt einen ersten und einen zweiten Magnetbereich aufweist, die durch einen Zwischenspalt voneinander getrennt sind, und wobei der Wälzlagerabschnitt und der Magnetlagerabschnitt gemeinsam die zwei Lagerpartner bewegbar zueinander lagern. Die Erfindung betrifft auch ein Verfahren zur Regelung einer oder der Lageranordnung.

Wälzlager dienen zur bewegbaren Lagerung von zwei Lagerpartnern und sind beispielsweise in der Bauform von Rotativlagern, insbesondere Radial- und Axialwälzlagern, oder Linearlagern bekannt. Die Lagerung erfolgt über einen berührenden Wälzkontakt der Wälzkörper mit Laufbahnen, welche auf den beiden Lagerpartnern angeordnet sind. Magnetlager basieren dagegen auf der magnetischen Abstoßung von gleichnamigen Magnetpolen, welche durch einen Luftspalt voneinander getrennt und üblicherweise berührungslos ausgebildet sind. Verfahren zur Regelung des Luftspalts zwischen den Magnetpolen sind aus den Anwendungsbereichen der Magnetschwebebahnen und Blutpumpen, beispielsweise aus den Druckschriften DE 4228309 C1, DE 3931797 A1 oder DE 10123138 B4 bekannt. Die Druckschrift JP 63-167119 AA betrifft ebenfalls eine Linearlagerung ausgebildet als eine Magnetlagerung. Die Druckschrift US 4,985,651 offenbart eine Linearlagerung, wobei die Linearlagerung eine Wälzlagereinrichtung für eine Notlauffunktion aufweist.

Eine Kombination von Wälzlagern und Magnetlagern ist aus der Druckschrift DE 10 2006 053 041 A1 zu entnehmen. In dieser Druckschrift wird eine Lagerungsanordnung, insbesondere für eine Werkzeugmaschine, beschrieben, wobei zur Lagerung eine Wälzlagerung und eine Magnetlagerung vorgesehen sind, die kinematisch parallel zueinander geschaltet sind. Die Magnetlagerung weist in sich abstoßende Anordnung positionierte Permanentmagnete auf, welche die Wälzlagerung gegen eine Belastungsrichtung entlasten.

Die Druckschrift DE 10 2006 036 051 A offenbart eine Rundtischlagerungs- und Antriebsvorrichtung mit einem auf einem Gestell drehbar gelagerten Rundtisch, zu dessen Lagerung eine Axial-Radial-Wälzlagerung sowie eine aktive Magnetlagerung vorgesehen sind.

Die Druckschrift EP 0470 637 A1 betrifft eine Lageranordnung für eine Turbomolekularpumpe mit einem radial wirkenden, magnetisch passiven Lager, welches über ein Dämpfungselement vorspannbar ist.

Die Druckschrift EP 0612 933 A1, die den nächstkommenden Stand der Technik bildet, betrifft einen Motor mit einer elektrisch steuerbaren Magnetlagerung, die es ermöglicht, eine Welle des Motors in radialer Richtung zu der Drehachse so zu verschieben, dass ein Spaltbreite konstant gehalten werden kann.

Der Erfindung liegt die Aufgabe zugrunde, eine Lageranordnung sowie ein Verfahren vorzuschlagen, welche einen gleichmäßigen Lauf bei der Lagerung von Lagerpartnern gewährleisten.

Diese Aufgabe wird durch eine Lageranordnung mit den Merkmalen des Anspruchs 1 und mit einem Verfahren mit den Merkmalen des Anspruchs 12 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Lageranordnung mit zwei Lagerpartnern vorgeschlagen, wobei die zwei Lagerpartner bewegbar, insbesondere drehbar und/oder verschiebbar und/oder entlang einer Kurvenbahn bewegbar, zueinander gelagert sind. Die Lageranordnung kann insbesondere in Werkzeug- und/oder Druckmaschinen, Sondermaschinen, Förderanlagen, Werkstückträgerumlaufsystemen, Nahrungsmittel-, Abfüll- und/oder Verpackungsanlagen integriert sein.

Sie weist einen Wälziagerabschnitt auf, in dem die zwei Lagerpartner über Wälzkörper, insbesondere Rollen und/oder Kugeln, zueinander abwälzend gelagert sind.

Ferner umfasst die Lageranordnung einen Magnetlagerabschnitt, wobei der Magnetlagerabschnitt einen ersten und einen zweiten Magnetbereich aufweist, die durch einen Zwischenspalt voneinander getrennt sind. Erster und zweiter Magnetbereich sind bevorzugt gleichpolig und/oder gleichnamig zueinander ausgebildet und/oder ausgerichtet und/oder angeordnet, so dass diese sich magnetisch abstoßen. Erfindungsgemäß ist einer der Magnetbereiche mit einem der Lagerpartner und der andere Magnetbereich mit dem anderen Lagerpartner mechanisch gekoppelt. Der Zwischenspalt bildet eine magnetische Dämpfungszone zwischen den Magnetbereichen und somit zwischen den Lagerpartnern.

Magnetlagerabschnitt und Wälzlagerabschnitt sind vorzugsweise in Bezug auf die Lagerung der Lagerpartner kinematisch parallel zueinander angeordnet. Insbesondere ist der Magnetlagerabschnitt zur Entlastung des Wälziagerabschnitts gegen eine Belastungsrichtung ausgebildet und/oder angeordnet. Die Belastungsrichtung ist beispielsweise durch die Richtung einer Gewichtskraft gegeben.

Im Rahmen der Erfindung wird vorgeschlagen, mindestens einen Aktor in die Lageranordnung zu integrieren, welcher zur Steuerung und/oder Regelung des Zwischenspalts, insbesondere der Zwischenspaltbreite, also der Distanz zwischen dem ersten und dem zweiten Magnetbereich, ausgebildet ist.

Durch die Änderung des Zwischenspalts wird der Abstand zwischen dem ersten und dem zweiten Magnetbereich variiert. Die aufgrund der Abstoßung der Magnetbereiche auftretende magnetische Kraft ist von dem Abstand der Magnetbereiche abhängig, so dass über die Steuerung und/oder Regelung des Zwischenspalts die Stärke der Abstoßung der Magnetbereiche und somit der Entlastung des Wälzlagerabschnitts einstellbar ist. Die Erfindung bezieht sich vorzugsweise auf einen lokalen Abschnitt der Lageranordnung, der Wälzlagerabschnitt und der Magnetlagerabschnitt können somit einen begrenzten Teilbereich der Lageranordnung bilden.

Es ist dabei eine Überlegung der Erfindung, dass durch eine permanente, magnetische Entlastung des Wälzlagerabschnitts die Lageranordnung statisch entlastet wird. Doch können während des Betriebs der Lageranordnung auftretende dynamische Störungen durch Unwucht, Verkippung oder gegebenenfalls Rattern oder Schwingen der Lageranordnung bei einer derartigen statischen Anordnung nicht kompensiert werden. Der Vorteil der Erfindung ist darin zu sehen, dass derartige Störungen aktiv und/oder dynamisch im Betrieb und insbesondere nach der Entstehung gedämpft, unterdrückt und/oder beseitigt werden können. Somit bietet die Erfindung die Möglichkeit, auftretende Störungen im Betrieb der Lageranordnung über eine Steuerung und/oder Regelung des Luftspaltes und der daraus resultierenden Änderung der Magnetkraft des Magnetlagerabschnitts zu kompensieren.

Bei einer bevorzugten Ausführungsform der Erfindung ist in mindestens einem der Magnetbereiche, vorzugsweise in beiden Magnetbereichen, ein oder mehrere Permanentmagnete angeordnet, welche die magnetische Abstoßungskraft begründen. In dieser Ausführungsform ist der Magnetlagerabschnitt als eine passive Baugruppe ausgebildet.

Dem gegenüber ist es bevorzugt, wenn der Aktor durch Fremdenergie betreibbar ist. Insbesondere ist der Aktor durch Druckluft, hydraulisch, pneumatisch und/oder allgemein fluidtechnisch und/oder durch elektrische Energie, z.B. als Piezoaktor, betreibbar.

Bei einer vorteilhaften Weiterbildung der Erfindung weist die Lageranordnung eine Kontrolleinrichtung auf, welche signaltechnisch mit dem oder den Aktoren verschaltet ist, wobei die Kontrolleinrichtung programmtechnisch und/oder schaltungstechnisch ausgebildet ist, den Aktor so anzusteuern, dass Unwuchten, Rattern, Schwingungen und/oder Verkippungen - oder allgemein Laufstörungen der Lageranordnung im Betrieb - gedämpft und/oder kompensiert werden. Die Kontrolleinrichtung kann hierzu eine Steuerung und/oder eine Regelung aufweisen. Die Stellgröße der Kontrolleinrichtung in einem Kontrollkreis zu dynamischen Kompensation der Laufstörungen der Lageranordnung ist die Änderung der des Zwischenspalts, insbesondere der Zwischenspaltbreite.

Zur Versorgung der Kontrolleinrichtung mit einer Ist-Größe ist es bevorzugt, wenn die Lageranordnung ein oder mehrere Sensoren umfasst, die ausgebildet und/oder angeordnet ist bzw. sind, derartige Laufstörungen zu erfassen.

Insbesondere ist die Kontrolleinrichtung und/oder der Sensor ausgebildet, dynamische oder hochdynamische Eigenschaften der Lageranordnung zu erfassen und/oder auszusteuern bzw. auszuregeln. Beispielsweise ist die Abtastfrequenz des Sensors und/oder die Ansteuerfrequenz des Aktors und/oder die Regel- oder Steuerfrequenz der Kontrolleinrichtung größer als 1 Hz, vorzugsweise größer als 10 Hz und insbesondere größer als 100 Hz. Insbesondere arbeitet die Kontrolleinrichtung während des Betriebs der Lageranordnung in Echtzeit.

Bei einer möglichen Ausprägung der Erfindung weist die Lageranordnung eine Mehrzahl von derartigen Magnetlagerabschnitten auf, welche durch den Aktor und/oder eine Mehrzahl derartiger Aktoren selektiv und/oder einzeln und/oder unabhängig voneinander verkippt und/oder verschoben werden können. Die Lageranordnung erstreckt sich bei dieser Ausprägung über eine offene oder geschlossene Strecke, wobei Teilbereiche der Strecke vorzugsweise unabhängig voneinander steuer- und/oder regelbare Magnetlagerabschnitte aufweisen. Dem entsprechend kann der Zwischenspalt und damit die magnetische Abstoßung entlang der Strecke unterschiedlich eingestellt werden, um beispielsweise lokale Belastungen zu kompensieren.

Bei einer anderen Ausprägung der Erfindung weist die Lageranordnung ebenfalls eine Mehrzahl von Magnetlagerabschnitten auf, welche jedoch gemeinsam auf einem Tragköper angeordnet sind. Der Tragkörper ist steif ausgebildet, so dass dieser durch den Aktor oder eine Mehrzahl derartiger Aktoren in seiner Gesamtheit verkippt und/oder verschoben werden kann.

Erfindungsgemäß ist die Lageranordnung als eine Rotativlagerung ausgebildet. In dieser Realisierung ist es bevorzugt, dass der Tragkörper als eine die Drehachse umlaufende Einheit und insbesondere als eine Scheibe ausgebildet ist bzw. einen Scheibenabschnitt aufweist.

Bei einer konkreten Realisierung der Erfindung ist der Wälzlagerabschnitt als ein Wälzlager, insbesondere Rillenkugellager und/oder ein Vierpunktlager und/oder Kreuzrollenlager ausgebildet. Eingesetzt wird diese Lageranordnung beispielsweise bei einem Rund- oder Werkzeugtisch, welcher üblicherweise statisch und dynamisch hoch belastet ist und sich schnell dreht.

Bei allen Ausführungsformen können sich die Magnetabschnitte mehrreihig, parallel verlaufend erstrecken. Bei einer Rotativlagerung können die Magnetabschnitte optional in zwei oder mehr konzentrischen und/oder koaxialen Kreisen angeordnet sein.

Prinzipiell ist die Erfindung bei Achsen aller Art, die einer hohen Last- und Gewichtskraftbelastung unterworfen sind, vorteilhaft einsetzbar, um - in Vergleich zu unkompensierten Achsen - eine Erhöhung der Lebensdauer der Wälzführungen erreichen zu können.

Ein weiterer Gegenstand der Erfindung betrifft ein Verfahren zur Regelung und/oder Steuerung der Lageranordnung nach einem der vorhergehenden Ansprüche bzw. wie sie zuvor beschreiben wurde, wobei die Lageranordnung im Betrieb über den oder die Aktoren vorzugsweise dynamisch geregelt und/oder gesteuert wird, um Laufstörungen zu kompensieren und/oder zu dämpfen.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Querschnittdarstellung durch einen Rundtisch mit einer Lageranordnung als ein erstes Ausführungsbeispiel der Erfindung:
- Figur 2: den Rundtisch in der Figur 1 in gleicher Darstellung mit einer anderen Lageranordnung als ein zweites Ausführungsbeispiel der Erfindung.

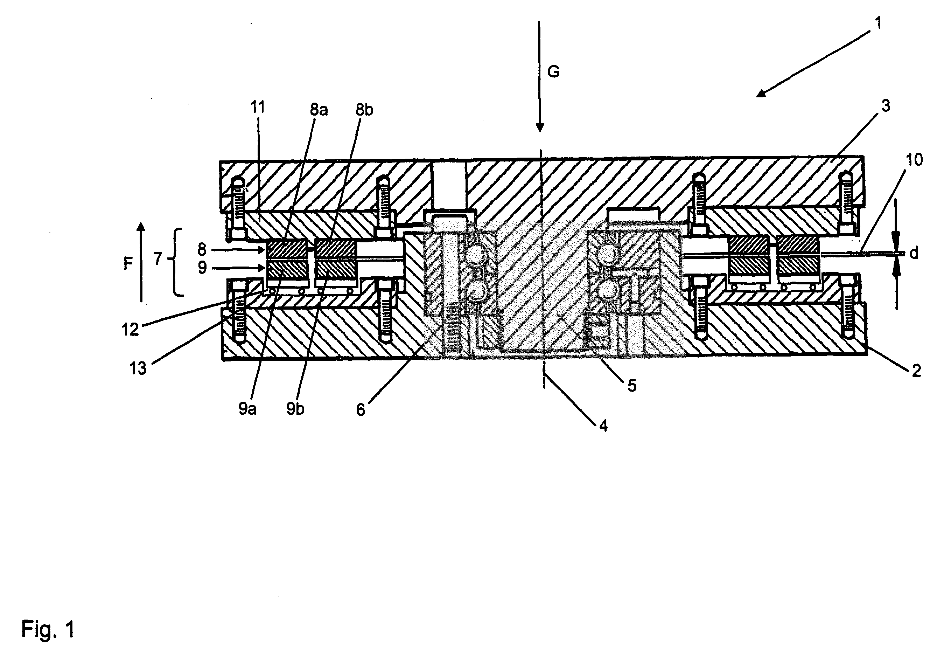

Die Figur 1 zeigt in einer schematischen Querschnittdarstellung eine Rundtischvorrichtung 1, wie sie beispielsweise als Werkstückträgerumlaufsystem eingesetzt wird.

Der Rundtisch 1 weist einen Stator 2 auf, welcher ortsfest angeordnet ist und auf dem ein Läufer 3 als Rundtisch um eine Drehachse 4 drehbar gelagert ist. Derartige Rundtischvorrichtungen 1 werden zum einen durch eine Gewichtskraft G des Läufers 3 bzw. auf den Läufer angeordnete Vorrichtungen und zum anderen durch dynamische Belastungen aufgrund hoher Drehgeschwindigkeiten um die Drehachse 4 belastet.

Der Läufer 3 weist einen Mittelfuß 5 auf, welcher über ein zweireihiges Schrägkugellager 6 in dem Stator 2 um die Drehachse 4 drehbar gelagert ist. Das Schrägkugellager 6 ist ausgebildet, um sowohl axial in Richtung der Drehachse 4 gerichtete Kräfte, wie zum Beispiel die Gewichtskraft G, als auch radial zu der Drehachse 4 gerichtete Kräfte aufzunehmen und über den Stator 2 abzutragen.

Zur Entlastung des Schrägkugellagers 6 zeigt die Rundtischvorrichtung 1 eine Magnetlagerung 7, welche ausgebildet ist, eine Magnetkraft F zu erzeugen, die der Gewichtskraft G entgegen gerichtet ist und dadurch das Schrägkugellager 6 entlastet.

Die Magnetlagerung 7 weist einen ersten Magnetabschnitt 8 und einen zweiten Magnetabschnitt 9 auf, welche voneinander Ober einen Zwischenspalt 10 um einen Betrag d von 0,5 mm bis 5 mm beabstandet sind. Erster und zweiter Magnetabschnitt 8, 9 sind umlaufend um die Drehachse 4 ausgebildet und weisen jeweils zwei konzentrisch zueinander angeordnete Ringe 8 a, b bzw. 9 a,b auf. Der jeweils radial äußere Ring 8 a und 9 a und der jeweils innere Ring 8 b und 9 b sind in Draufsicht auf die Rundtischvorrichtung 1 jeweils deckungsgleich zueinander angeordnet. Die Ringe 8 a, b und 9 a, b weisen jeweils Permanentmagnete auf, die jeweils so angeordnet und/oder ausgerichtet sind, dass sich der erste Magnetabschnitt 8 und der zweite Magnetabschnitt 9 gegeneinander abstoßen. Beispielsweise stehen sich in dem Zwischenspalt 10 die Minuspole (alternativ die Pluspole) der Magnetabschnitte 8 und 9 gegenüber.

Der erste Magnetabschnitt 8 ist über einen Zwischenträger 11 fest und starr mit dem Läufer 3 verbunden. Der zweite Magnetabschnitt 9 ist dagegen über eine Aktoreinrichtung 12 auf einem Trägerkörper 13 oder - bei anderen Ausführungsformen - auf dem Stator 2 angeordnet.

Die Aktoreinrichtung 12 ist dazu ausgebildet, den zweiten Magnetabschnitt 9 oder Teilbereiche davon in bzw. gegen die Richtung der Drehachse 4 zu verschieben bzw. so zu verschieben, dass die Breite d des Zwischenspaltes 10 verändert wird. Durch eine Verschiebung des zweiten Magnetabschnitts 9 bzw. durch Änderung der Spaltbreite d des Zwischenspaltes 10 ist die Magnetkraft F einstellbar, welche der Gewichtskraft G entgegen wirkt.

Die Aktoreinrichtung 12 kann ausgebildet sein, den zweiten Magnetabschnitt 9 gesamt, einen einzelnen Ring 9a oder 9b des zweiten Magnetabschnitts 9 oder umlaufende einzelne Streckenabschnitte der Ringe 9 a, b selektiv in bzw. gegen die Richtung zu dem ersten Magnetabschnitt 8 zu verschieben. Auf diese Weise ist es möglich, rotationssymmetrisch oder in Abhängigkeit der Position in Umlaufrichtung um die Drehachse 4 die Magnetkraft F zu erhöhen bzw. zu erniedrigen.

Optional ist die Rundtischvorrichtung 1 und insbesondere die Magnetlagerung 7 bzw. die Aktoreinrichtung 12 mit einer Kontrolleinrichtung (nicht gezeigt) verbunden, welche ausgebildet ist, Störungen in der Laufruhe, wie zum Beispiel Unwucht, Verkippung, Rattern und/oder Schwingen des Läufers 3 dynamisch und/oder in Echtzeit durch Ansteuerung der Aktoreinrichtung 12 zu dämpfen und/oder zu kompensieren. Als Eingangsgröße für eine derartige Regelung bzw. Steuerung kann ein Signal eines Sensors (nicht gezeigt) verwendet werden, welcher die Unwucht etc. entweder für den Läufer 3 gesamt oder in Abhängigkeit der Position in Umlaufrichtung ermittelt.

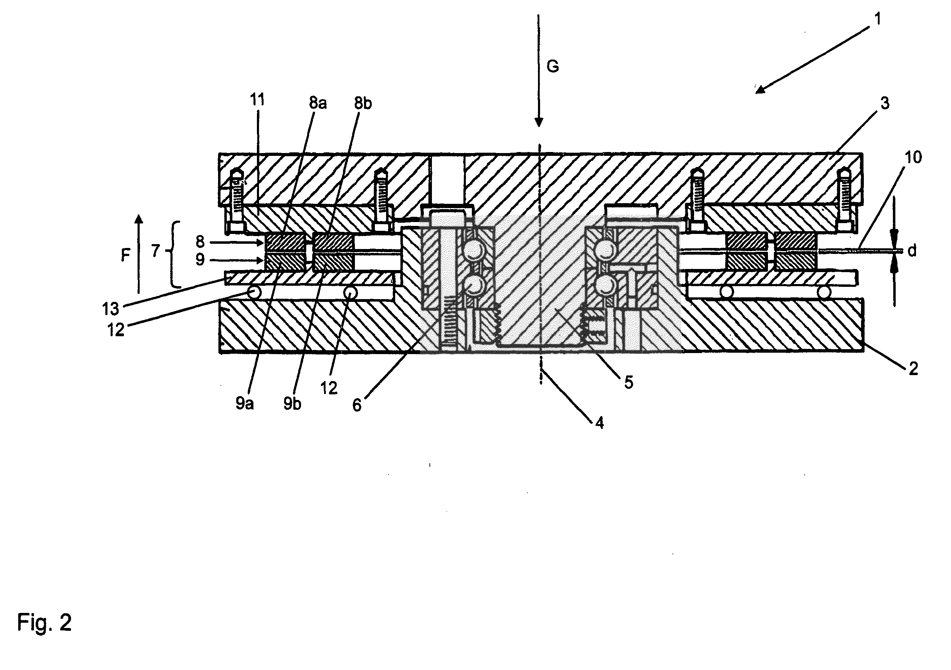

Die Figur 2 zeigt ein zweites Ausführungsbeispiel der Erfindung, wobei der zweite Magnetabschnitt 9 und insbesondere dessen zwei Ringe 9 a, b auf einem gemeinsamen, starren Trägerkörper 13 angeordnet ist, welcher über eine Aktoreinrichtung 12 in seiner Gesamtheit verschoben und/oder verkippt werden kann.

Die Aktoreinrichtung 12 kann bei beiden Ausführungsformen als eine Pneumatik, eine Hydraulik und/oder ein Fluidsystem oder als ein elektrischer Antrieb bzw. Aktor ausgebildet sein.

Insgesamt wird somit auch ein mechatronisches System zur Dämpfung und Unwuchtkompensation von Lagerungen durch Regelung oder Steuerung des Zwischenspalts 10 der Magnetlagerung 7 vorgeschlagen.

### Bezugszeichenliste

- 1: Rundtisch, Rundtischvorrichtung
- 2: Stator
- 3: Läufer
- 4: Drehachse
- 5: Mittelfuß
- 6: Schrägkugellager
- 7: Magnetlagerung
- 8: erster Magnetabschnitt
- 8 a, b: innerer und äußerer Ring
- 9: zweiter Magnetabschnitt
- 9 a, b: innerer und äußerer Ring
- 10: Zwischenspalt
- 11: Zwischenträger
- 12: Aktorkörper
- 13: Trägerkörper

## Patentansprüche

1. Lageranordnung (1) ausgebildet als eine Rotativlagerung mit einer Drehachse (4)
mit zwei Lagerpartnern (2,3),
mit einem Wälzlagerabschnitt (6)
und mit einem Magnetlagerabschnitt (7), wobei der Magnetlagerabschnitt (7) einen ersten und einen zweiten Magnetbereich (8,9) aufweist, die durch einen Zwischenspalt (10) voneinander getrennt sind,
wobei der Wälzlagerabschnitt (6) und der Magnetlagerabschnitt (7) gemeinsam die zwei Lagerpartner (2,3) bewegbar zueinander lagern,
und mit einem Aktor (12), der zur Steuerung und/oder Regelung des Zwischenspalts (10) ausgebildet ist, wobei der Aktor (12) eine Spaltbreite (d) des Zwischenspaltes (10) ändert und wobei der Aktor (12) eine Aktoreinrichtung (12) aufweist, wobei der erste Magnetbereich (8) mit dem als Läufer ausgebildeten ersten Lagerpartner (3) und der zweite Magnetbereich (9) mit dem als Stator ausgebildeten zweiten Lagerpartner (2) mechanisch gekoppelt ist und wobei der zweite Magnetbereich (9) einen zweiten Magnetabschnitt (9) aufweist,
**dadurch gekennzeichnet, dass**
der zweite Magnetabschnitt (9) über die Aktoreinrichtung (12) auf einem Trägerkörper (13) auf dem Stator (2) oder auf dem Stator (2) angeordnet ist und dass die Aktoreinrichtung ausgebildet ist, den zweiten Magnetabschnitt (12) oder Teilbereiche davon in bzw. gegen die Richtung der Drehachse (4) so zu verschieben, dass die Spaltbereite (d) des Zwischenspalts (10) verändert wird.

2. Lageranordnung (1) nach Anspruch 1, **dadurch gekennzeichnet, dass** in mindestens einem Magnetbereich (8,9) ein Permanentmagnet angeordnet ist.

3. Lageranordnung (1) nach Anspruch 1 oder 2, **dadurch gekennzeichnet, dass** der Aktor (12) durch Fremdenergie betreibbar ist.

4. Lageranordnung (1) nach Anspruch 3, **dadurch gekennzeichnet, dass** die Fremdenergie durch Druckluft, hydraulisch, pneumatisch, fluidtechnisch und/oder elektrisch übertragen wird.

5. Lageranordnung (1) nach einem der vorhergehenden Ansprüche, **gekennzeichnet durch** eine Kontrolleinrichtung, welche ausgebildet ist, den Aktor (12) anzusteuern, um Unwuchten, Rattern, Schwingungen und/oder Verkippungen der Lagerpartner (2,3) im Betrieb zu dämpfen.

6. Lageranordnung (1) nach Anspruch 5, **gekennzeichnet durch** einen Sensor, welcher ausgebildet ist, Unwuchten, Rattern, Schwingungen und/oder Verkippungen der Lagerpartner (2,3) zu erfassen.

7. Lageranordnung (1) nach einem der vorhergehenden Ansprüche, **gekennzeichnet durch** eine Mehrzahl von derartigen Magnetlagerabschnitten (8,9), welche **durch** den Aktor (12) oder eine Mehrzahl derartiger Aktoren (12) selektiv verkippt und/oder verschoben werden können.

8. Lageranordnung (1) nach einem der vorhergehenden Ansprüche, **gekennzeichnet durch** eine Mehrzahl von derartigen Magnetlagerabschnitten, die gemeinsam auf einem Tragkörper (13) angeordnet sind, wobei der Tragkörper (13) **durch** den Aktor (12) oder einer Mehrzahl derartiger Aktoren verkippt und/oder verschoben werden kann.

9. Lageranordnung (1) nach Anspruch 8, **dadurch gekennzeichnet, dass** der Tragkörper (13) die Drehachse umlaufend und insbesondere als Scheibe ausgebildet ist.

10. Lageranordnung (1) nach einem der vorhergehenden Ansprüche, **dadurch gekennzeichnet, dass** der Wälzlagerabschnitt (6) als ein Rillenkugellager ausgebildet ist.

11. Lageranordnung (1) nach einem der vorhergehenden Ansprüche, **dadurch gekennzeichnet, dass** die Lageranordnung als ein Rundtisch (1) ausgebildet ist.

12. Verfahren zur Regelung und/oder Steuerung der Lageranordnung (1) nach einem der vorhergehenden Ansprüche, **dadurch gekennzeichnet, dass** die Lageranordnung (1) im Betrieb über den oder eine Mehrzahl derartiger Aktoren (12) vorzugsweise dynamisch geregelt und/oder gesteuert wird, um Laufstörungen der Lagerpartner (2,3) zu kompensieren und/oder zu dämpfen, wobei der mindestens eine Aktor (12) eine Spaltbreite (d) des Zwischenspaltes (10) ändert.

## Claims

1. Bearing arrangement (1), designed as a rotary mounting with an axis of rotation (4),
with two bearing partners (2, 3),
with a rolling-bearing portion (6)
and with a magnetic-bearing portion (7), the magnetic-bearing portion (7) having a first and a second magnetic region (8, 9) which are separated from one another by an intermediate gap (10),
the rolling-bearing portion (6) and the magnetic-bearing portion (7) jointly mounting the two bearing partners (2, 3) movably with respect to one another,
and with an actuator (12) which is designed for controlling and/or regulating the intermediate gap (10), the actuator (12) changing a gap width (d) of the intermediate gap (10), and the actuator (12) having an actuator device (12), the first magnetic region (8) being mechanically coupled to the first bearing partner (3) designed as a rotor and the second magnetic region (9) being mechanically coupled to the second bearing partner (2) designed as a stator, and the second magnetic region (9) having a second magnetic portion (9),
**characterized in that**
the second magnetic portion (9) is arranged via the actuator devise (12) on a carrier body (13) of a stator (2) or of the stator (2), and **in that** the actuator device is designed to displace the second magnetic portion (12) or subregions thereof in or opposite to the direction of the axis of rotation (4), such that the gap width (d) of the intermediate gap (10) is varied.

2. Bearing arrangement (1) according to Claim 1, **characterized in that** a permanent magnet is arranged in at least one magnetic region (8, 9).

3. Bearing arrangement (1) according to Claim 1 or 2, **characterized in that** the actuator (12) can be operated by external energy.

4. Bearing arrangement (1) according to Claim 3, **characterized in that** the external energy is transmitted by compressed air, hydraulically, pneumatically, fluidically and/or electrically.

5. Bearing arrangement (1) according to one of the preceding claims, **characterized by** a checking device which is designed to activate the actuator (12) in order to damp unbalances, rattling, vibrations and/or tilts of the bearing partners (2, 3) during operation.

6. Bearing arrangement (1) according to Claim 5, **characterized by** a sensor which is designed to detect unbalances, rattling, vibrations and/or tilts of the bearing partners (2, 3).

7. Bearing arrangement (1) according to one of the preceding claims, **characterized by** a plurality of such magnetic-bearing portions (8, 9) which can be selectively tilted and/or displaced by means of the actuator (12) or a plurality of such actuators (12).

8. Bearing arrangement (1) according to one of the preceding claims, **characterized by** a plurality of such magnetic-bearing portions which are arranged jointly on a carrying body (13), the carrying body (13) being capable of being tilted and/or displaced by means of the actuator (12) or a plurality of such actuators.

9. Bearing arrangement (1) according to Claim 8, **characterized in that** the carrying body (13) is designed to run around the axis of rotation and, in particular, as a disc.

10. Bearing arrangement (1) according to one of the preceding claims, **characterized in that** the rolling-bearing portion (6) is designed as a grooved ball bearing.

11. Bearing arrangement (1) according to one of the preceding claims, **characterized in that** the bearing arrangement is designed as a turntable (1).

12. Method for regulating and/or controlling the bearing arrangement (1) according to one of the preceding claims, **characterized in that** the bearing arrangement (1) is regulated and/or controlled preferably dynamically during operation via the actuator (12) or a plurality of such actuators (12), in order to compensate and/or damp running faults of the bearing partners (2, 3), the at least one actuator (12) changing a gap width (d) of the intermediate gap (10).

## Revendications

1. Ensemble palier (1) réalisé sous forme de support sur palier rotatif avec un axe de rotation (4), avec deux partenaires de palier (2, 3),
avec une section de palier à roulement (6) et avec une section de palier magnétique (7), la section de palier magnétique (7) présentant une première et une deuxième région magnétique (8, 9), lesquelles sont séparées l'une de l'autre par une fente intermédiaire (10),
la section de palier à roulement (6) et la section de palier magnétique (7) supportant en commun les deux partenaires de palier (2, 3) de manière déplaçable l'un par rapport à l'autre,
et avec un actionneur (12) qui est réalisé pour commander et/ou réguler la fente intermédiaire (10), l'actionneur (12) faisant varier une largeur de fente (d) de la fente intermédiaire (10) et l'actionneur (12) présentant un dispositif d'actionneur (12), la première région magnétique (8) étant accouplée au premier partenaire de palier (3) réalisé sous forme de rotor et la deuxième région magnétique (9) étant accouplée au deuxième partenaire de palier (2) réalisé sous forme de stator, et la deuxième région magnétique (9) présentant une deuxième section magnétique (9),
**caractérisé en ce que**
la deuxième section magnétique (9) est disposée par le biais du dispositif d'actionneur (12) sur un corps de support (13) sur le stator (2) ou sur le stator (2) et **en ce que** le dispositif d'actionneur est réalisé de manière à déplacer la deuxième section magnétique (12) ou des réglions partielles de celle-ci dans la direction de l'axe de rotation (4) ou dans la direction opposée de telle sorte que la largeur de fente (d) de la fente intermédiaire (10) soit modifiée.

2. Ensemble palier (1) selon la revendication 1, **caractérisé en ce qu'**un aimant permanent est disposé dans au moins une région magnétique (8, 9).

3. Ensemble palier (1) selon la revendication 1 ou 2, **caractérisé en ce que** l'actionneur (12) peut être entraîné par une énergie extérieure.

4. Ensemble palier (1) selon la revendication 3, **caractérisé en ce que** l'énergie extérieure est transmise par de l'air comprimé, hydrauliquement, pneumatiquement, fluidiquement et/ou électriquement.

5. Ensemble palier (1) selon l'une quelconque des revendications précédentes, **caractérisé par** un dispositif de contrôle qui est réalisé de manière à commander l'actionneur (12) pour amortir des déséquilibres, des vibrations, des oscillations et/ou des basculements des partenaires de palier (2, 3) pendant le fonctionnement.

6. Ensemble palier (1) selon la revendication 5, **caractérisé par** un capteur réalisé pour détecter des déséquilibres, des vibrations, des oscillations et/ou des basculements des partenaires de palier (2, 3).

7. Ensemble palier (1) selon l'une quelconque des revendications précédentes, **caractérisé par** une pluralité de telles sections de palier magnétiques (8, 9) qui peuvent être basculées et/ou déplacées de manière sélective par l'actionneur (12) ou une pluralité de tels actionneurs (12).

8. Ensemble palier (1) selon l'une quelconque des revendications précédentes, **caractérisé par** une pluralité de telles sections de palier magnétiques qui sont disposées en commun sur un corps de support (13), le corps de support (13) prouvant être basculé et/ou déplacé par l'actionneur (12) ou par une pluralité de tels actionneurs.

9. Ensemble palier (1) selon la revendication 8, **caractérisé en ce que** le corps de support (13) est réalisé autour de l'axe de rotation et notamment sous forme de disque.

10. Ensemble palier (1) selon l'une quelconque des revendications précédentes, **caractérisé en ce que** la section de palier à roulement (6) est réalisée sous forme de roulement rainuré à billes.

11. Ensemble palier (1) selon l'une quelconque des revendications précédentes, **caractérisé en ce que** l'ensemble palier est réalisé sous forme de table ronde (1).

12. Procédé de régulation et/ou de commande de l'ensemble palier (1) selon l'une quelconque des revendications précédentes, **caractérise en ce que** l'ensemble palier (1), pendant le fonctionnement, est régulé et/ou commandé de préférence dynamiquement par le biais de l'actionneur ou d'une pluralité de tels actionneurs (12), afin de compenser et/ou d'amortir des perturbations de roulement des partenaires de palier (2, 3), l'au moins un actionneur (12) faisant varier une largeur de fente (d) de la fente intermédiaire (10).
